# EUROPÄISCHE PATENTSCHRIFT

(11) **EP 1 960 237 B1**
(45) Veröffentlichungstag und Bekanntmachung des Hinweises auf die Patenterteilung: **13.11.2013**
(21) Anmeldenummer: 06829451.1
(22) Anmeldetag: 08.12.2006
(51) Int. Cl.: B60R 21/26, F42B 3/00, B60R 21/233, B60R 21/2338

(54) **GASSACKMODUL**
AIRBAG MODULE
MODULE DE POCHE A GAZ

(30) Priorität: 08.12.2005 DE 102005058721
(43) Veröffentlichungstag der Anmeldung: 27.08.2008
(60) Teilanmeldung: 10011943.7
(73) Patentinhaber: TRW Airbag Systems GmbH, 84544 Aschau am Inn (DE)
(72) Erfinder: SCHÖNHUBER, Georg, 84565 Oberneukirchen (DE); ENZMANN, Ernst, 83224 Grassau (DE); NUIDING, Hannes, 84453 Mühldorf am Inn (DE)
(74) Vertreter: Mehnert, Bernhard
(86) Internationale Anmeldenummer: PCT/EP2006/011857
(87) Internationale Veröffentlichungsnummer: WO 2007/065709

(56) Entgegenhaltungen:
- EP-A- 1 683 690
- US-A1- 2002 158 456
- US-A1- 2004 113 406
- US-A1- 2005 057 027

## Beschreibung

Die Erfindung betrifft ein Gassackmodul für ein Fahrzeug-Sicherheitssystem, mit einem Gassack, einem Gasgenerator, einem Modulgehäuse und einer pyrotechnischen Aktuatoreinheit, die durch einen Befestigungsabschnitt an einem Modulbauteil angebracht ist, wobei der bei einer Aktivierung des Gasgenerators mit einem Innendruck beaufschlagte, wenigstens abschnittsweise durch das Gassackinnere begrenzte Raum als Gassackkammer definiert ist, und wobei die Aktuatoreinheit nach ihrer Auslösung in den am Modulbauteil fixierten Befestigungsabschnitt und wenigstens ein abgetrenntes Fragment zerbricht.

Ein Gassackmodul und den Merkmalen des Oberbegriffs des Anspruchs 1 ist aus US 2004/0113406 A1 bekannt.

Bei modernen Fahrzeug-Sicherheitssystemen, insbesondere bei Gassackmodulen, gibt es Bestrebungen, das Sicherheitssystem immer individueller an verschiedene Parameter einer Crash-Situation anzupassen. Eine bekannte und vorteilhafte Möglichkeit ist dabei der Einsatz von Zugmitteln wie z.B. Fangbändern, durch deren Freigabe Abströmöffnungen geöffnet oder geschlossen werden. Mit solchen Zugmitteln kann darüber hinaus auch die Gassackgeometrie beeinflußt und/oder ein zusätzliches Gassackvolumen freigegeben werden.

Zur aktiven Zugmittelfreigabe kann eine sogenannte Fangbandfreigabeeinrichtung TAU (Tether Activation Unit) eingesetzt werden. Eine solche TAU ist dabei in der Regel durch eine vergleichsweise geringe Querkraftbelastung auf Abscheren beansprucht, weshalb z.B. eine TAU-Kunststoffausführung oder eine Rastbefestigung der TAU möglich ist. Herkömmliche, massive Sprengbolzen aus Metall, die in der Regel über ein Gewinde befestigt werden, sind für diese Einsatzfälle oftmals überdimensioniert und zu teuer.

Aufgabe der Erfindung ist es, die Funktionssicherheit eines Gassackmoduls mit einer pyrotechnischen Aktuatoreinheit zu erhöhen.

Erfindungsgemäß wird die Aufgabe durch ein Gassackmodul mit den Merkmalen des Anspruchs 1, alternativ durch ein Gassackmodul und den Merkmalen des weben geordneten Anspruchs 9 gelöst.

Das abgetrennte Fragment kann sich somit nicht mehr über eine beliebige Weglänge frei bewegen, sondern ist abhängig von der Ausbildung des Rückhaltemittels auf eine Bewegung in der Nähe des Befestigungsabschnitts beschränkt, was Beschädigungen des Moduls verhindert. Es ist besonders vorteilhaft, daß sich das abgetrennte Fragment außerhalb der Gassackkammer befindet, da das Fragment weiter von einem Insassen entfernt ist und unabhängig vom Entfalten des Gassacks bewegt bzw. zurückgehalten werden kann.

In einer Ausführungsform greift das Rückhaltemittel an einem abtrennbaren. Abschnitt der Aktuatoreinheit an, der nach der Auslösung der Aktuatoreinheit das abgetrennte Fragment bildet. In dieser Ausführungsform entsteht zu keinem Zeitpunkt ein vollkommen frei bewegliches Fragment, da der abtrennbare Abschnitt der Aktuatoreinheit bereits vor der Auslösung der Aktuatoreinheit durch das Rückhaltemittel gehalten ist.

Das Rückhaltemittel ist in dieser Ausführungsform ein Zündkabel der Aktuatoreinheit. Das sowieso vorhandene und zur Stromversorgung der Aktuatoreinheit notwendige Zündkabel wird in diesem Fall zugleich als Rückhaltemittel verwendet, so daß kein zusätzliches Bauteil zur Fragmentrückhaltung benötigt wird.

Ein Sicherungselement ist vorgesehen, das die Verbindung zwischen dem Zündkabel und einem Stecker des Zündkabels und/oder die Verbindung zwischen dem Stecker und dem abtrennbaren Abschnitt der Aktuatoreinheit gegen ungewolltes Lösen sichert. Da diese Verbindungen üblicherweise nicht für größere mechanische Belastungen ausgelegt sind, stellt ein solches Sicherungselement eine einfache Möglichkeit dar, die maximale Belastbarkeit des Rückhaltemittels zu erhöhen.

Darüber hinaus kann zwischen dem Stecker und einer Stromversorgungseinheit ein Fixiermittel zur Zündkabelfixierung vorgesehen sein. Mithilfe eines solchen Fixiermittels wird die freie Kabellänge des Zündkabels verkürzt, so daß sich der mögliche Bewegungsradius des abgetrennten Fragments verringert.

Erfindungsgemäß umgibt das Rückhaltemittel einen abtrennbaren Abschnitt der Aktuatoreinheit, der nach einer Auslösung der Aktuatoreinheit das abgetrennte Fragment bildet. In diesem Fall kann sich das abgetrennte Fragment unmittelbar nach der Trennung vom Befestigungsabschnitt frei bewegen, stößt jedoch nach einer üblicherweise relativ kurz gewählten Wegstrecke am Rückhaltemittel an, wodurch die Bewegungsmöglichkeiten des Fragments begrenzt sind.

Vorzugsweise definiert das Rückhaltemittel zusammen mit dem Befestigungsabschnitt der Aktuatoreinheit und einem Modulbauteil nach einer Auslösung der Aktuatoreinheit einen Käfig für das abgetrennte Fragment, in dem sich das Fragment frei bewegen kann. Eine mechanisch belastbare Verbindung, die das abgetrennte Fragment zuverlässig am Rückhaltemittel befestigt, ist in diesem Fall nicht notwendig.

Weitere vorteilhafte Ausgestaltungen der Erfindung ergeben sich aus den Unteransprüchen.

Die Erfindung wird nachfolgend anhand bevorzugter Ausführungsformen beschrieben, die in den beigefügten Zeichnungen dargestellt sind. In den Zeichnungen zeigen:
- Figuren 1a und 1b perspektivische Ansichten eines erfindungsgemäßen Gassackmoduls gemäß einer ersten Ausführungsform vor bzw. nach der Auslösung einer Aktuatoreinheit;
- Figur 2 eine perspektivische Schnittansicht eines erfindungsgemäßen Gassackmoduls gemäß einer zweiten Ausführungsform;
- Figur 3 eine schematische Detailvariante des Gassackmoduls ähnlich der zweiten Ausführungsform nach Figur 2;
- Figur 4 eine perspektivische Ansicht eines Gassackmoduls gemäß einer dritten Ausführungsform (wicht Zur Erfindung gehörend);
- Figur 5 eine perspektivische Ansicht einer Aktuatoreinheit für ein Gassackmodul gemäß einer vierten Ausführungsform (wicht Zur Erfindung gehörend)
- Figur 6 eine perspektivische Ansicht eines wicht erfindungsgemäßen Gassackmoduls gemäß einer fünften Ausführungsform;
- Figur 7 eine perspektivische Untersicht eines wicht erfindungsgemäßes Gassackmoduls gemäß einer sechsten Ausführungsform;
- Figur 8 eine perspektivische Schnittansicht eines erfindungsgemäßen Gassackmoduls gemäß einer siebten Ausführungsform;
- Figur 9 ein konkretes Ausführungsbeispiel des Gassackmoduls gemäß Figur 8 in einer perspektivischen Untersicht;
- Figuren 10a bis 10d perspektivische Ansichten einer Aktuatoreinheit sowie deren Montage an ein erfindungsgemäßes Gassackmodul gemäß einer achten Ausführungsform; und
- Figur 11 einen Schnitt durch eine Aktuatoreinheit eines erfindungsge-mäßen Gassackmoduls gemäß einer neunten Ausführungsform.

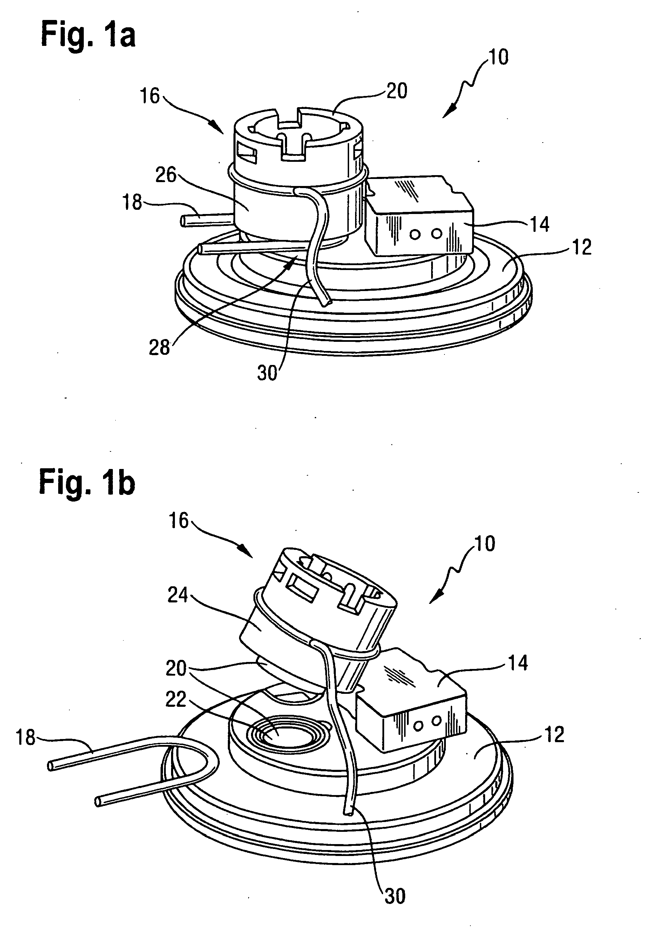

Die Figuren 1a und 1b zeigen ausschnittsweise ein Gassackmodul 10, genauer eine Ansicht der Unterseite eines Gasgenerators 12 des Gassackmoduls 10. Am Gasgenerator 12 ist eine Zündvorrichtung 14 für einen Treibsatz angebracht, die bei ihrer Aktivierung für ein Ausströmen von Gas aus dem Gasgenerator 12 sorgt. Ferner ist am Gasgenerator 12 eine Aktuatoreinheit 16 befestigt, die vor ihrer Auslösung ein Zugmittel 18 am Gasgenerator 12 fixiert (Figur 1a).

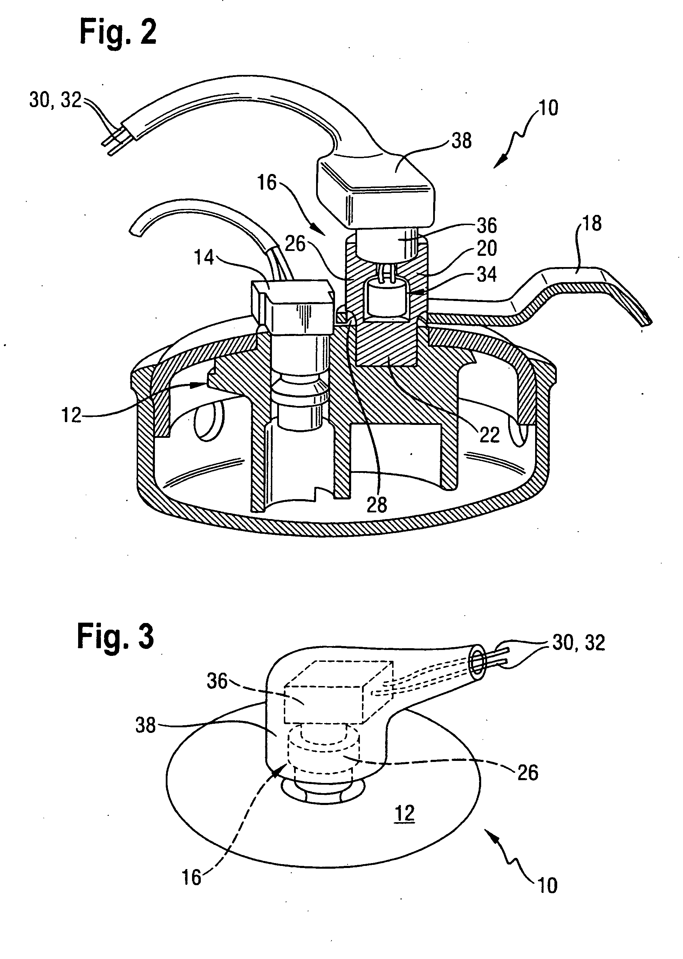

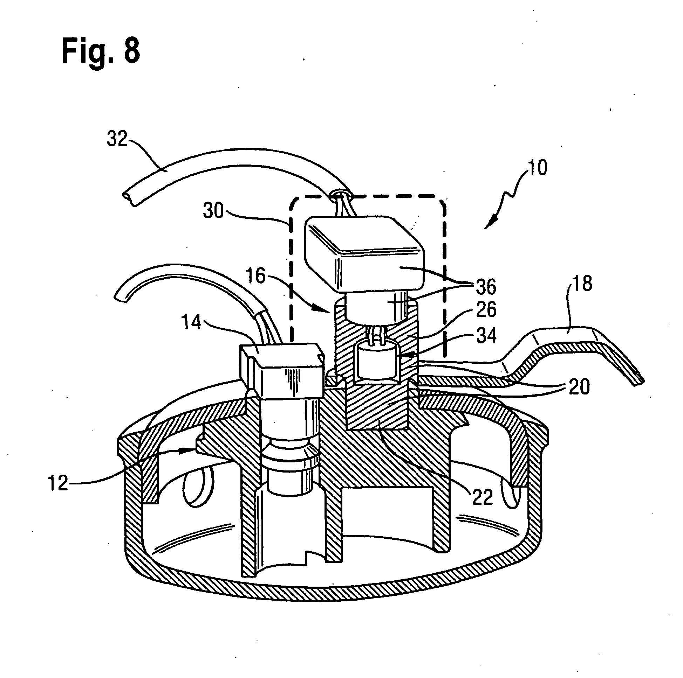

Die Aktuatoreinheit 16 weist einen pyrotechnischen Anzünder (vgl. Figuren 2 und 8, Bezugszeichen 34) und ein Gehäuse 20 auf, in dem der Anzünder untergebracht ist. Durch eine Auslösung des Anzünders zerbricht das Gehäuse 20 in einen Befestigungsabschnitt 22 und wenigstens ein abgetrenntes Fragment 24 (Figur 1b). Vor einer Auslösung der Aktuatoreinheit 16 ist die Aktuatoreinheit 16 über den Befestigungsabschnitt 22 fest mit dem Gasgenerator 12 verbunden, wobei in weiteren Ausführungsvarianten auch eine Befestigung an anderen Modulbauteilen (z.B. Modulgehäuse, Gasgeneratorträger...) denkbar ist. Außerdem ist der Befestigungsabschnitt 22 vor einer Auslösung der Aktuatoreinheit 16 fest, vorzugsweise einstückig mit einem abtrennbaren Abschnitt 26 verbunden, der nach einer Auslösung der Aktuatoreinheit 16 das abgetrennte Fragment 24 bildet.

Das Zugmittel 18 (beispielsweise eine Schnur oder ein Fangband) greift in Figur 1 a an einer als Sollbruchstelle ausgeführten Nut 28 zwischen dem Befestigungsabschnitt 22 und dem abtrennbaren Abschnitt 26 an. Nach einer Auslösung der Aktuatoreinheit 16 reißt die Aktuatoreinheit 16, genauer das Gehäuse 20 der Aktuatoreinheit 16 an dieser Sollbruchstelle auseinander und gibt das Zugmittel 18 frei (Figur 1b). Der Befestigungsabschnitt 22 bleibt weiter fest mit einem Generatorgehäuse des Gasgenerators 12 verbunden, wohingegen sich das abgetrennte Fragment 24 frei vom Gasgenerator 12 wegbewegen kann. In einem Fahrzeug-Sicherheitssystem ist eine unkontrollierte, freie Bewegung von abgetrennten Fragmenten unerwünscht, weshalb ein Rückhaltemittel 30 vorgesehen ist, das die freie Bewegungsmöglichkeit des abgetrennten Fragments 24 begrenzt. Das Rückhaltemittel 30 ist in der ersten Ausführungsform gemäß den Figuren 1a und 1b eine Schnur, die an einem ersten Schnurende um den abtrennbaren Abschnitt 26 der Aktuatoreinheit 16 geschlungen und an einem zweiten Schnurende mit dem Gasgenerator 12 verbunden ist. Am abtrennbaren Abschnitt 26 ist vorzugsweise eine Nut oder Öse vorgesehen, um eine sichere Verbindung zwischen dem ersten Schnurende und dem abtrennbaren Abschnitt 26 bzw. dem später abgetrennten Fragment 24 zu schaffen und ein ungewolltes Lösen des abgetrennten Fragments 24 vom Rückhaltemittel 30 zu verhindern. Alternativ kann statt einer Schnur auch ein anderes flexibles und reißfestes Rückhaltemittel 30, wie z.B. ein Draht eingesetzt werden. Ferner kann das zweite Schnurende auch an einem anderen Modulbauteil (z.B. Modulgehäuse, Gasgeneratorträger...) befestigt sein.

Die Figur 2 zeigt eine zweite Ausführungsform des Gassackmoduls 10, bei der das Rückhaltemittel 30 ein Zündkabel 32 der Aktuatoreinheit 16 ist. Der Anzünder 34 im Gehäuse 20 der Aktuatoreinheit 16 wird in der Regel durch einen Stromimpuls ausgelöst, der von einer (nicht gezeigten) Stromversorgungseinheit bereitgestellt und durch das Zündkabel 32 übertragen wird. In Ausführungsformen, bei denen das Zündkabel 32 am abtrennbaren Abschnitt 26 angreift, kann es neben der Stromversorgung auch als Rückhaltemittel 30 für das später abgetrennte Fragment 24 dienen.

In der Regel weist ein erstes Ende des Zündkabels 32 einen Stecker 36 auf und ist über eine Steckverbindung am abtrennbaren Abschnitt 26 der Aktuatoreinheit 16 befestigt. Die Verbindung zwischen Zündkabel 32 und Stecker 36 und/oder die Steckverbindung zwischen Stecker 36 und abtrennbarem Abschnitt 26 der Aktuatoreinheit 16 sind in der Regel für eine sichere Stromübertragung, jedoch nicht unbedingt für größere mechanische Beanspruchungen ausgelegt. Unter Umständen müssen daher Vorkehrungen getroffen werden, diese Verbindungen zu verstärken oder eine übermäßige mechanische Belastung der Verbindungen zu vermeiden. In der Ausführungsform gemäß Figur 2 ist daher ein Sicherungselement 38 vorgesehen, welches die Verbindung zwischen Zündkabel 32 und Stecker 36 verstärkt. Das Sicherungselement 36 ist in diesem Fall als Manschette oder Schrumpfschlauch ausgebildet.

Die Figur 3 zeigt eine Variante der zweiten Ausführungsform nach Figur 2, bei der die vom Sicherungselement 38 umgebenen Bauteile gestrichelt dargestellt sind. Dabei ist gut zu erkennen, daß sich das Sicherungselement 38 vom Zündkabel 32 über den Stecker 36 bis zum abtrennbaren Abschnitt 26 der Aktuatoreinheit 16 erstreckt. Verglichen mit Figur 2 verstärkt die Manschette bzw. der Schrumpfschlauch in Figur 3 daher nicht nur die Verbindung zwischen dem Zündkabel 32 und dem Stecker 36, sondern auch die Steckverbindung zwischen dem Stecker 36 und dem abtrennbaren Abschnitt 26 der Aktuatoreinheit 16.

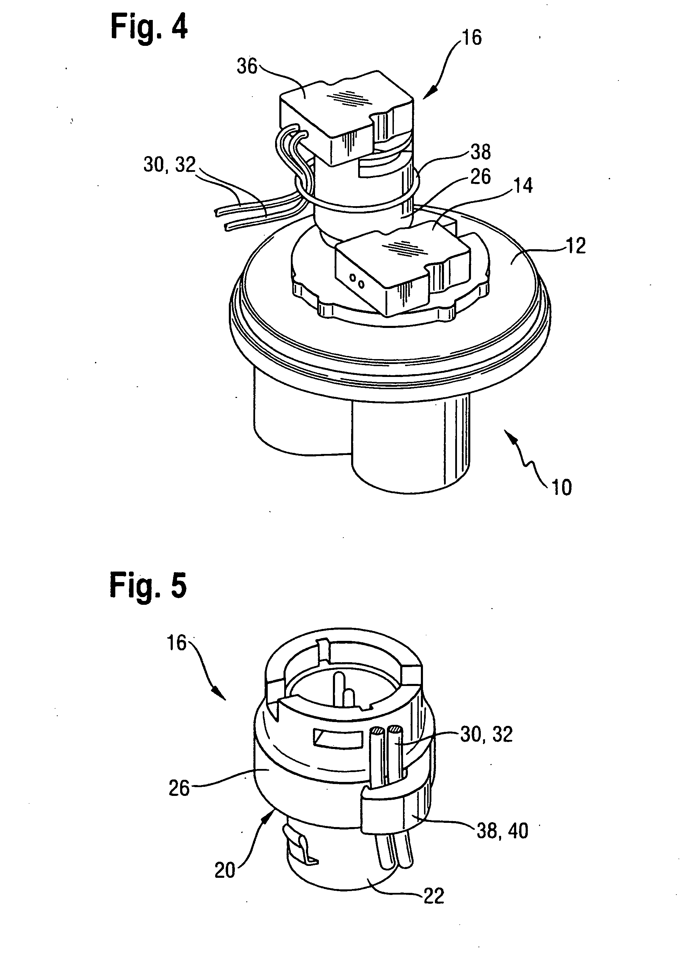

Die Figur 4 zeigt eine dritte Ausführungsform des Gassackmoduls 10, die sich von der zuvor beschriebenen, zweiten Ausführungsform lediglich durch die Art des Sicherungselements 38 unterscheidet. Statt der zuvor beschriebenen Ummantelung mit einem Schrumpfschlauch oder einer Manschette wird hier bevorzugt ein Kabelbinder (evtl. auch Schnur, Draht o.ä.) als Sicherungselement 38 verwendet. Der Kabelbinder fixiert dabei das Zündkabel 32 am abtrennbaren Abschnitt 26 der Aktuatoreinheit 16, wobei die Fixierung vorzugsweise so stark ist, daß das Zündkabel 32 im Bereich des Kabelbinders auch unter Zugbelastung keine Bewegung relativ zum abtrennbaren Abschnitt 26 durchführen kann. Dadurch wird auf einfache Art und Weise die Verbindung zwischen Zündkabel 32 und Stecker 36 sowie die Verbindung zwischen Stecker 36 und abtrennbarem Abschnitt 26 bzw. abgetrenntem Fragment 24 entlastet und ein Separieren des abgetrennten Fragments 24 vom Zündkabel 32 zuverlässig verhindert.

Das Gassackmodul 10 gemäß einer vierten Ausführungsform umfaßt eine Aktuatoreinheit 16 nach Figur 5, die eine weitere Alternative zur Ausführung des Sicherungselements 38 zeigt. Bei dieser alternativen Ausführungsvariante weist der abtrennbare Abschnitt 26 einen Fortsatz 40 zum Festklemmen des Zündkabels 32 am Gehäuse 20 auf. Das Zündkabel 32 wird dadurch im Bereich des Fortsatzes 40 in ähnlicher Weise wie bei dem zuvor beschriebenen Kabelbinder fixiert und entlastet dadurch die Verbindungen zwischen dem Zündkabel 32 und dem Stecker 36 sowie zwischen dem Stecker 36 und dem abtrennbaren Abschnitt 26. Da vorzugsweise das ganze Gehäuse 20, insbesondere jedoch der abtrennbare Abschnitt 26 der Aktuatoreinheit 16 aus Kunststoff besteht, ist das Anformen des hakenförmigen Fortsatzes 40, wie in Figur 5 dargestellt, mit geringem Aufwand möglich.

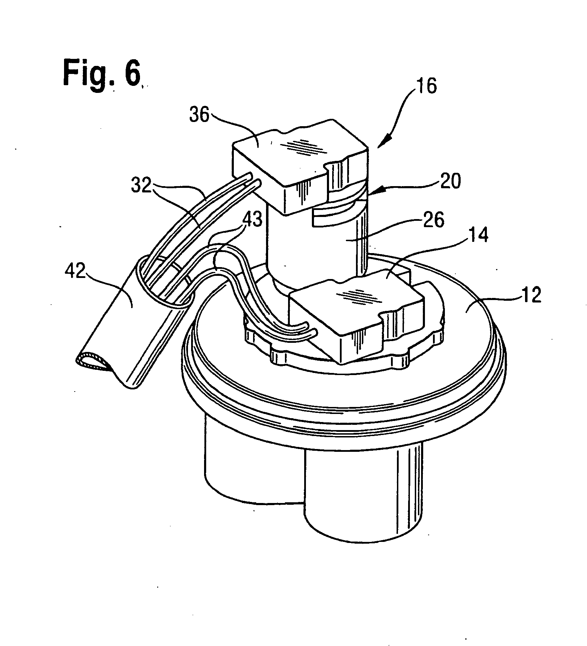

Die Figur 6 zeigt eine fünfte Ausführungsform des Gassackmoduls 10, bei der zwischen dem Stecker 36 und der Stromversorgungseinheit ein Fixiermittel 42 zur Zündkabelfixierung vorgesehen ist. Ohne ein solches Fixiermittel 42 wäre der mögliche Bewegungsradius des abgetrennten Fragments 24 nach einer Auslösung der Aktuatoreinheit 16 relativ groß; er würde im wesentlichen der Länge des Zündkabels 32 zwischen dem Stecker 36 und der Stromversorgungseinheit entsprechen. Um den Bewegungsradius des abgetrennten Fragments 24 möglichst gering zu halten, ist in der Figur 6 als Fixiermittel 42 eine Kabelführung vorgesehen, die neben dem Zündkabel 32 weitere Kabel 43 des Fahrzeug-Sicherheitssystems zu einem Kabelstrang zusammenfaßt. Im dargestellten Beispiel sind die weiteren Kabel 43 ebenfalls Zündkabel, welche die Zündvorrichtung 14 des Gasgenerators 12 aktivieren können. Da die weiteren Kabel 43 in der Regel nicht mit losen Bauteilen verbunden, sondern fixiert sind, ist der Kabelstrang durch diese weiteren Kabel 43 gehalten, so daß sich der Bewegungsradius des abgetrennten Fragments 24 im wesentlichen auf die freie Länge des Zündkabels 32 zwischen dem Stecker 36 und dem Beginn der Kabelführung verringert. Konkret kann die Kabelführung beispielsweise als Schrumpfschlauch (Figur 6) oder als Kabelbinder ausgeführt sein.

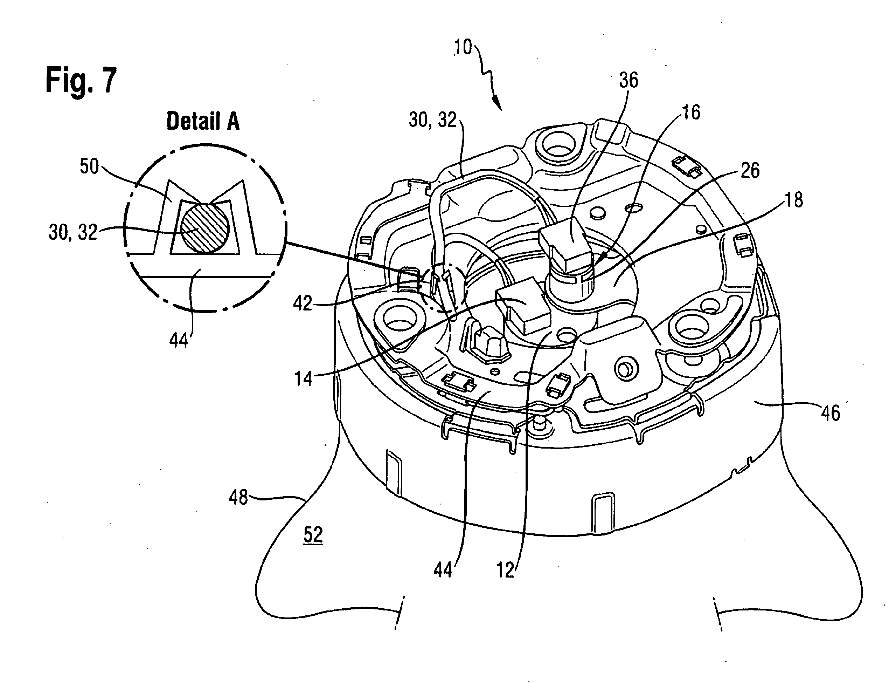

Die Figur 7 zeigt eine komplette Untersicht des Gassackmoduls 10 gemäß einer sechsten Ausführungsform. Neben dem bereits zuvor beschriebenen Gasgenerator 12 sind dabei weitere Modulbauteile, wie ein Gasgeneratorträger 44, ein Modulgehäuse 46 und ein Gassack 48 zu erkennen. An einem der Modulbauteile, hier am Gasgeneratorträger 44 sind als Fixiermittel 42 für das Zündkabel 32 zwei Haken 50 vorgesehen. Das Zündkabel 32 ist im Bereich dieser Haken 50 am Gasgeneratorträger 44 fixiert, so daß sich der Bewegungsradius des abgetrennten Fragments 24 nach einer Auslösung der Aktuatoreinheit 16 auf die Länge des Zündkabels 32 zwischen dem Stecker 36 und den Haken 50 reduziert. Im Detail A ist die Fixierung des Rückhaltemittels 30 durch die Haken 50 noch einmal vergrößert dargestellt.

Im folgenden wird anhand der Figur 7 auf einen besonderen Vorteil der Erfindung eingegangen, der auch für alle anderen Ausführungsformen gilt: Bei allen beschriebenen Gassackmodulen 10 ist eine Gassackkammer 52 als Raum definiert, der bei einer Aktivierung des Gasgenerators 12 mit einem Innendruck beaufschlagt und wenigstens abschnittsweise durch das Gassackinnere begrenzt wird. Je nach Ausführungsform des Gassackmoduls 10 können neben dem Gassack 48 auch weitere Modulbauteile wie der Gasgenerator 12 und/oder das Modulgehäuse 46 die Gassackkammer definieren. Da in der Figur 7 eine Untersicht des Gassackmoduls 10 gezeigt ist, erstreckt sich die Gassackkammer 52 in Figur 7 nach unten. Der abtrennbare Abschnitt 26 bzw. das später abgetrennte Fragment 24 befindet sich somit zu jeder Zeit außerhalb der Gassackkammer 52 und beeinflußt folglich die Entfaltung des Gassacks 48 nicht. Außerdem ist eine Beschädigung z.B. des Gassacks 48 durch das abgetrennte Fragment 24 ausgeschlossen. Das in Figur 7 ebenfalls dargestellte Zugmittel 18, welches durch die Aktuatoreinheit 16 fixiert ist, erstreckt sich bevorzugt durch eine Öffnung in einem Modulbauteil in die Gassackkammer 52 und ist dort beispielsweise am Gassack 48 befestigt.

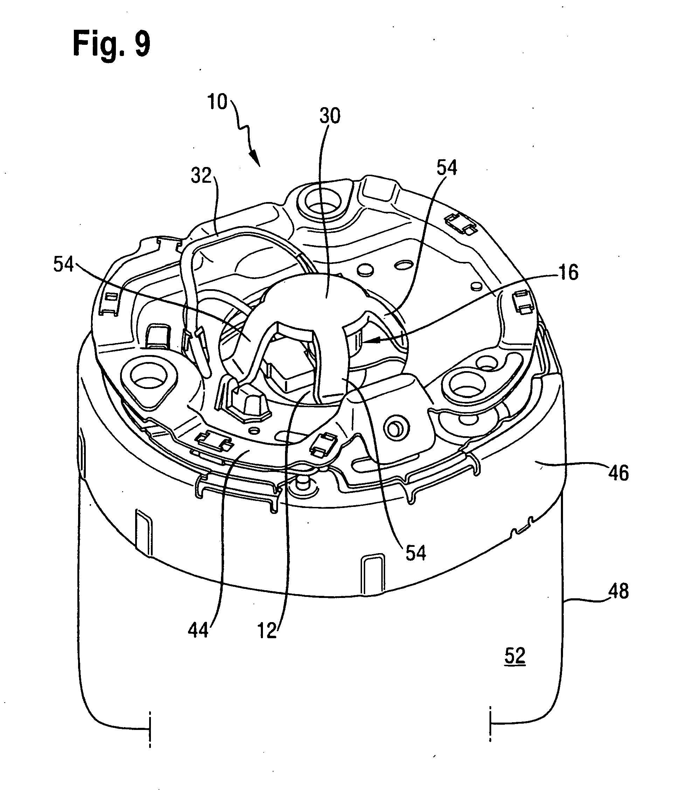

Die Figur 8 zeigt eine siebte Ausführungsform des Gassackmoduls 10, bei der das Rückhaltemittel 30 den abtrennbaren Abschnitt 26 bzw. nach der Auslösung der Aktuatoreinheit 16 das abgetrennte Fragment 24 umgibt. Das Rückhaltemittel 30 ist in Figur 8 lediglich schematisch dargestellt, wohingegen Figur 9 ein konkretes Ausführungsbeispiel zeigt. Das Rückhaltemittel 30 ist in Figur 9 eine gewölbte Spange mit vier elastischen Füßen 54, die im Gasgeneratorträger 44 verrastet sind. Es definiert mit einem oder mehreren Modulbauteilen einen Käfig für das abgetrennte Fragment 24, in dem sich das Fragment 24 frei bewegen kann. Alle eventuell vorhandenen Öffnungen im Käfig sind dabei kleiner als das abgetrennte Fragment 24 der Aktuatoreinheit 16. Ferner ist die Befestigung des Rückhaltemittels 30 am Gasgeneratorträger 44 oder einem sonstigen Modulbauteil fest und zuverlässig auszuführen, damit sich das Rückhaltemittel 30 durch einen Aufprall des abgetrennten Fragments 24 nicht löst.

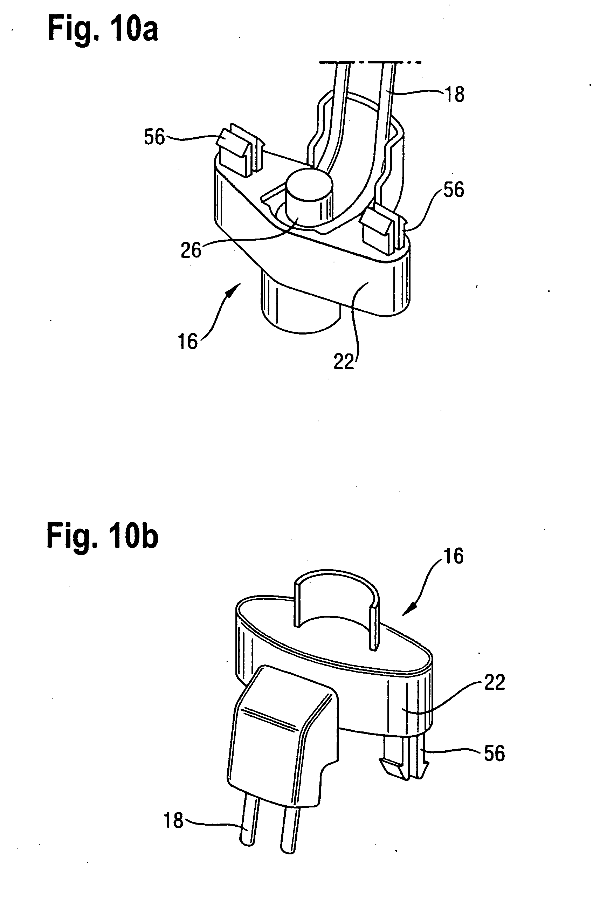

Die Figuren 10a bis 10d zeigen eine Aktuatoreinheit 16 und ein Gassackmodul 10 gemäß einer achten Ausführungsform. In einer Untersicht der Aktuatoreinheit (Figur 10a) sind der Befestigungsabschnitt 22 und der abtrennbaren Abschnitt 26 zu erkennen, wobei am Befestigungsabschnitt 22 Rasthaken 56 zur Befestigung der Aktuatoreinheit 16 an einem Modulbauteil vorgesehen sind. Ferner ist das Zugmittel 18 zu sehen, das im Bereich der späteren (vordefinierten) Bruchstelle zwischen dem Befestigungsabschnitt 22 und dem abtrennbaren Abschnitt 26 angreift.

In der Figur 10b sind die Aktuatoreinheit 16 und das Zugmittel 18 aus Figur 10a in einer Draufsicht dargestellt.

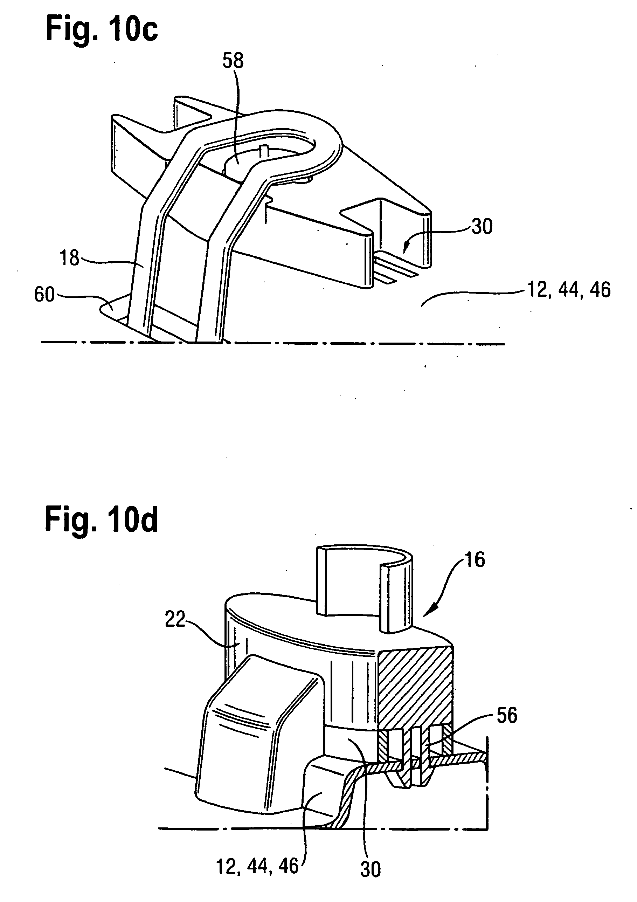

Die Figur 10c zeigt ein Modulgehäuse 46, an dem die Aktuatoreinheit 16 befestigt werden soll. Auf dem Modulgehäuse 46 ist das Rückhaltemittel 30 mit einer Ausnehmung 58 angeordnet, die im montierten Zustand der Aktuatoreinheit 16 den Käfig für das abgetrennte Fragment 24 bildet. Das Zugmittel 18 ist gemäß Figur 10c durch eine Öffnung 60 im Modulgehäuse 46 geführt und um die Ausnehmung 58 herumgelegt.

Die Aktuatoreinheit 16 gemäß den Figuren 10a bzw. 10b wird im folgenden auf das Zugmittel 18, das Rückhaltemittel 30 und das Modulgehäuse 46 aufgesteckt, so daß die Rasthaken 56 im Modulgehäuse 46 verrasten (vgl. Figur 10d). In diesem zusammengesteckten Zustand greift der abtrennbare Abschnitt 26 der Aktuatoreinheit 16 in die Ausnehmung 58 des Rückhaltemittels 30 ein und fixiert das Zugmittel 18 in der in Figur 10c gezeigten Stellung. Nach einer Auslösung der Aktuatoreinheit 16 wird der abtrennbare Abschnitt 26 zum abgetrennten Fragment 24 und kann sich frei in der Ausnehmung 58 bewegen. Das Zugmittel 18 wird dadurch freigegeben und kann sich durch die Öffnung 60 des Modulgehäuses 46 ins Innere der Gassackkammer 52 bewegen.

Statt am Modulgehäuse 46 kann die Aktuatoreinheit 16 alternativ auch an anderen Modulbauteilen wie dem Gasgenerator 12 oder dem Gasgeneratorträger 44 befestigt sein. Für den Fall, daß das Modulbauteil kein dünnes Blech ist, sondern eine größere Materialstärke aufweist, muß das Rückhaltemittel 30 nicht wie dargestellt ein separates, aufgesetztes Bauteil sein, sondern kann in das Modulbauteil integriert sein. Darüber hinaus ist es auch denkbar, daß das Rückhaltemittel 30 in ein Bauteil zur Aufnahme des Gassackmoduls 10, beispielsweise ein Lenkrad, integriert ist. Nach einer Montage des Gassackmoduls 10 bildet eine Ausnehmung im Lenkrad den Käfig für den abtrennbaren Abschnitt 26 der Aktuatoreinheit 16.

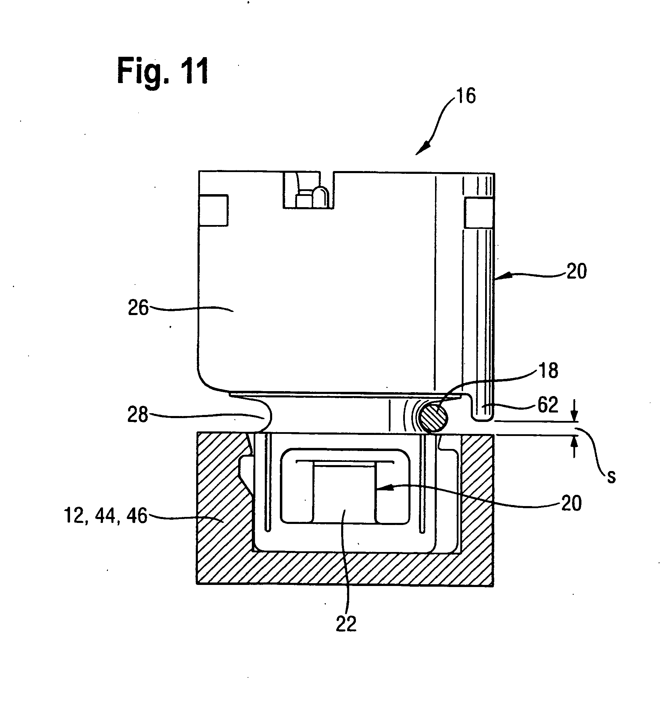

Die Figur 11 zeigt eine Aktuatoreinheit 16 mit einer Zugmittelsicherung 62, die nach einer Befestigung der Aktuatoreinheit 16 an einem Modulbauteil und vor einer Aktivierung des pyrotechnischen Anzünders 34 das Zugmittel 18 gegen ungewolltes Lösen von der Aktuatoreinheit 16 sichert. In dieser neunten Ausführungsform des Gassackmoduls 10 nach Figur 11 ist der abtrennbare Abschnitt 26, vorzugsweise sogar das gesamte Gehäuse 20 der Aktuatoreinheit 16, aus Kunststoff hergestellt. Die Zugmittelsicherung 62 kann daher mit geringem Aufwand als einstückig angeformter Gehäusefortsatz am abtrennbaren Abschnitt 26 ausgebildet sein. Die Breite eines Spaltes s zwischen dem jeweiligen Modulbauteil und der Zugmittelsicherung 62 ist im montierten Zustand (Figur 11) dabei kleiner als der Durchmesser des Zugmittels 18, so daß sich das Zugmittel 18 vor einer Auslösung der pyrotechnischen Aktuatoreinheit 10 nicht lösen kann.

## Patentansprüche

1. Gassackmodul für ein Fahrzeug-Sicherheitssystem, mit einem Gassack (48), einem Gasgenerator (12), einem Modulgehäuse (46) und einer pyrotechnischen Aktuatoreinheit (16), die durch einen Befestigungsabschnitt (22) an einem Modulbauteil angebracht ist,
wobei der bei einer Aktivierung des Gasgenerators (12) mit einem Innendruck beaufschlagte, wenigstens abschnittsweise durch das Gassackinnere begrenzte Raum als Gassackkammer (52) definiert ist, und
wobei die Aktuatoreinheit (16) nach ihrer Auslösung in den am Modulbauteil fixierten Befestigungsabschnitt (22) und wenigstens ein abgetrenntes Fragment (24) zerbricht,
wobei sich das abgetrennte Fragment (24) außerhalb der Gassackkammer (52) befindet,
wobei ein Rückhaltemittel (30) vorgesehen ist, welches die freie Bewegungsmöglichkeit des abgetrennten Fragments (24) begrenzt,
**dadurch gekennzeichnet, daß** das Rückhaltemittel (30) einen abtrennbaren Abschnitt (26) der Aktuatoreinheit (16) umgibt, der nach einer Auslösung der Aktuatoreinheit (16) das abgetrennte Fragment (24) bildet.

2. Gassackmodul nach Anspruch 1, **dadurch gekennzeichnet, daß** die pyrotechnische Aktuatoreinheit (16) einen pyrotechnischen Anzünder (34) und ein Gehäuse (20) aufweist, in dem der Anzünder (34) untergebracht ist, wobei das Gehäuse (20) durch eine Auslösung des Anzünders (34) in den Befestigungsabschnitt (22) und das wenigstens eine abgetrennte Fragment (24) zerbricht.

3. Gassackmodul nach einem der vorhergehenden Ansprüche, **dadurch gekennzeichnet, daß** das Rückhaltemittel (30) an einem Modulbauteil befestigt ist.

4. Gassackmodul nach einem der vorhergehenden Ansprüche, **dadurch gekennzeichnet, daß** das Rückhaltemittel (30) an einem abtrennbaren Abschnitt (26) der Aktuatoreinheit (16) angreift, der nach der Auslösung der Aktuatoreinheit (16) das abgetrennte Fragment (24) bildet.

5. Gassackmodul nach einem der Ansprüche 1 bis 4, **dadurch gekennzeichnet, daß** das Rückhaltemittel (30), der Befestigungsabschnitt (22) der Aktuatoreinheit (16) und ein Modulbauteil nach einer Auslösung der Aktuatoreinheit (16) einen Käfig für das abgetrennte Fragment (24) definieren, in dem sich das Fragment (24) frei bewegen kann.

6. Gassackmodul nach einem der Ansprüche 1 bis 5, **dadurch gekennzeichnet, daß** das Rückhaltemittel (30) in einem Modulbauteil verrastet ist.

7. Gassackmodul nach einem der Ansprüche 1 bis 6, **dadurch gekennzeichnet, daß** das Rückhaltemittel (30) zwischen der pyrotechnischen Aktuatoreinheit (16) und einem Modulbauteil angeordnet ist.

8. Gassackmodul nach einem der Ansprüche 1 bis 7, **dadurch gekennzeichnet, daß** das Rückhaltemittel (30) in ein Modulbauteil integriert ist.

9. Gassackmodul für ein Fahrzeug-Sicherheitssystem, mit einem Gassack (48), einem Gasgenerator (12), einem Modulgehäuse (46) und einer pyrotechnischen Aktuatoreinheit (16), die durch einen Befestigungsabschnitt (22) an einem Modulbauteil angebracht ist,
wobei der bei einer Aktivierung des Gasgenerators (12) mit einem Innendruck beaufschlagte, wenigstens abschnittsweise durch das Gassackinnere begrenzte Raum als Gassackkammer (52) definiert ist, und
wobei die Aktuatoreinheit (16) nach ihrer Auslösung in den am Modulbauteil fixierten Befestigungsabschnitt (22) und wenigstens ein abgetrenntes Fragment (24) zerbricht,
wobei sich das abgetrennte Fragment (24) außerhalb der Gassackkammer (52) befindet,
wobei ein Rückhaltemittel (30) vorgesehen ist, welches die freie Bewegungsmöglichkeit des abgetrennten Fragments (24) begrenzt,
wobei das Rückhaltemittel (30) an einem abtrennbaren Abschnitt (26) der Aktuatoreinheit (16) angreift, der nach der Auslösung der Aktuatoreinheit (16) das abgetrennte Fragment (24) bildet, und
wobei ferner das Rückhaltemittel (30) ein Zündkabel (32) der Aktuatoreinheit (16) ist, wobei
ein erstes Ende des Zündkabels (32) über einen Stecker (36) am abtrennbaren Abschnitt (26) der Aktuatoreinheit (16) und ein zweites Ende des Zündkabels (32) an einer Stromversorgungseinheit angreift, wobei
ein Sicherungselement (38) vorgesehen ist, das die Verbindung zwischen Zündkabel (32) und einem Stecker (36) des Zündkabels (32) und ggf. zusätzlich die Verbindung zwischen Stecker (36) und dem abtrennbaren Abschnitt (26) der Aktuatoreinheit (16) gegen ungewolltes Lösen sichert, wobei das Sicherungselement (38) als Manschette oder Schrumpfschlauch ausgebildet ist.

10. Gassackmodul nach Anspruch 9, **dadurch gekennzeichnet, daß** die pyrotechnische Aktuatoreinheit (16) einen pyrotechnischen Anzünder (34) und ein Gehäuse (20) aufweist, in dem der Anzünder (34) untergebracht ist, wobei das Gehäuse (20) durch eine Auslösung des Anzünders (34) in den Befestigungsabschnitt (22) und das wenigstens eine abgetrennte Fragment (24) zerbricht.

11. Gassackmodul nach Anspruch 9 oder 10 **dadurch gekennzeichnet, daß** das Rückhaltemittel (30) an einem Modulbauteil befestigt ist.

## Claims

1. An airbag module for a vehicle safety system comprising an airbag (48), an inflator (12), a module casing (46) and a pyrotechnical actuator unit (16) mounted on a modular component by a fastening portion (22),
wherein the space pressurized by internal pressure upon activation of the inflator (12) and restricted at least in portions by the inside of the airbag is defined as airbag chamber (52), and
wherein, after being released, the actuator unit (16) breaks into the fastening portion (22) fixed to the modular component and at least one separated fragment (24),
wherein the separated fragment (24) is provided outside the airbag chamber (52), wherein a restraining member (30) is provided for restricting the free possibility of movement of the separated fragment (24),
**characterized in that** the restraining member (30) surrounds a separable portion (26) of the actuator unit (16) forming the separated fragment (24) after release of the actuator unit (16).

2. The airbag module according to claim 1, **characterized in that** the pyrotechnical actuator unit (16) includes a pyrotechnical igniter (34) and a housing (20) in which the igniter (34) is accommodated, wherein the housing (20) breaks into the fastening portion (22) and the at least one separated fragment (24) by triggering the igniter (34).

3. The airbag module according to any one of the preceding claims, **characterized in that** the restraining means (30) is fastened to a modular component.

4. The airbag module according to any one of the preceding claims, **characterized in that** the restraining means (30) acts on a separable portion (26) of the actuator unit (16) forming the separated fragment (24) after release of the actuator unit (16).

5. The airbag module according to any one of the claims 1 to 4, **characterized in that**, after release of the actuator unit (16), the restraining means (30), the fastening portion (22) of the actuator unit (16) and a modular component define a cage for the separated fragment (24) within which the fragment (24) can move freely.

6. The airbag module according to any one of the claims 1 to 5, **characterized in that** the restraining means (30) is locked in a modular component.

7. The airbag module according to any one of the claims 1 to 6, **characterized in that** the restraining means (30) is arranged between the pyrotechnical actuator unit (16) and a modular component.

8. The airbag module according to any one of the claims 1 to 7, **characterized in that** the restraining means (30) is integrated in a modular component.

9. An airbag module for a vehicle safety system comprising an airbag (48), an inflator (12), a modular casing (46) and a pyrotechnical actuator unit (16) mounted on a modular component by a fastening portion (22),
wherein the space pressurized by internal pressure upon activation of the inflator (12) and restricted at least in portions by the inside of the airbag is defined as airbag chamber (52), and
wherein, after being released, the actuator unit (16) breaks into the fastening portion (22) fixed to the modular component and at least one separated fragment (24),
wherein the separated fragment (24) is provided outside the airbag chamber (52),
wherein a restraining member (30) is provided for restricting the free possibility of movement of the separated fragment (24),
wherein the restraining member (30) acts on a separable portion (26) of the actuator unit (16) forming the separated fragment (24) after release of the actuator unit (16), and
wherein further the restraining member (30) is an ignition cable (32) of the actuator unit (16), wherein
a first end of the ignition cable (32) acts on the separable portion (26) of the actuator unit (16) via a connector (36) and a second end of the ignition cable (32) acts on a power supply unit, wherein
a locking element (38) is provided for locking the connection between the ignition cable (32) and a connector (36) of the ignition cable (32) and possibly additionally the connection between the connector (36) and the separable portion (26) of the actuator unit (16) against inadvertent release, the locking element (38) being in the form of a sleeve or shrinkable tubing.

10. The airbag module according to claim 9, **characterized in that** the pyrotechnical actuator unit (16) includes a pyrotechnical igniter (34) and a housing (20) in which the igniter (34) is accommodated, wherein the housing (20) breaks into the fastening portion (22) and the at least one separated fragment (24) by triggering the igniter (34).

11. The airbag module according to claim 9 or 10, **characterized in that** the restraining means (30) is fastened to a modular component.

## Revendications

1. Module airbag pour un système de sécurité de véhicule comprenant un airbag (48), un générateur de gaz (12), un corps de module (46) et un actionneur pyrotechnique (16) qui est fixé sur un élément du module par une zone de fixation (22),
pour lequel s'applique lors de l'activation du générateur de gaz (12) une pression interne, au moins pour la portion de volume limitée à l'intérieur du sac gonflable définit en tant que chambre de l'airbag (52), et
pour lequel l'actionneur (16) se casse à la suite de son déclenchement dans la zone de fixation (22) à l'élément de module et avec au moins un fragment séparé (24)
pour lequel le fragment séparé (24) se trouve à l'extérieur de la chambre de l'airbag,
pour lequel un moyen de retenue (30) est prévu, lequel limite les possibilités de mouvement du fragment séparé (24),
**caractérisé en ce que** le moyen de retenue (30) entoure une partie séparable (26) de l'actionneur (16), qui forme le fragment séparé (24) après le déclenchement de l'actionneur (16).

2. Module airbag selon la revendication 1, **caractérisé en ce que** l'actionneur pyrotechnique (16) comporte un inflammateur pyrotechnique (34) et un corps (20), dans lequel se trouve l'inflammateur (34), pour lequel le corps (20) se casse lors du déclenchement de l'inflammateur (34) dans la zone de fixation (22) en au moins un fragment séparé (24).

3. Module airbag selon au moins une des revendications précédentes, **caractérisé en ce que** le moyen de retenue (30) est fixé à un élément de module.

4. Module airbag selon au moins une des revendications précédentes, **caractérisé en ce que** le moyen de retenue (30) s'accroche à une partie séparable (26) de l'actionneur (16), qui forme le fragment séparé (24) après le déclenchement de l'actionneur (16).

5. Module airbag selon l'une des revendications 1 à 4, **caractérisé en ce que** le moyen de retenue (30), la zone de fixation (22), l'actionneur (16) et un élément de module définissent après le déclenchement de l'actionneur (16) une cage pour le fragment séparé (24), dans laquelle le fragment (24) peut se déplacer librement.

6. Module airbag selon l'un des revendications 1 à 5, **caractérisé en ce que** le moyen de retenue (30) est fixé dans un élément du module.

7. Module airbag selon l'une des revendications 1 à 6, **caractérisé en ce que** le moyen de retenue (30) est placé entre l'actionneur pyrotechnique (16) et un élément du module.

8. Module airbag selon l'une des revendications 5 à 7, **caractérisé en ce que** le moyen de retenue (30) est intégré dans un élément du module.

9. Module airbag pour un système de sécurité de véhicule comprenant un airbag (48), un générateur de gaz (12), un corps de module (46) et un actionneur pyrotechnique (16) qui est fixé sur un élément du module par une zone de fixation (22),
pour lequel s'applique lors de l'activation du générateur de gaz (12) une pression interne, au moins pour la portion de volume limitée à l'intérieur du sac gonflable définit en tant que chambre de l'airbag (52), et
pour lequel l'actionneur (16) se casse à la suite de son déclenchement dans la zone de fixation (22) à l'élément de module et avec au moins un fragment séparé (24)
pour lequel le fragment séparé (24) se trouve à l'extérieur de la chambre de l'airbag (52),
pour lequel un moyen de retenue (30) est prévu, lequel limite les possibilités de mouvement du fragment séparé (24),
pour lequel le moyen de retenue (30) entoure une partie séparable (26) de l'actionneur (16), qui forme le fragment séparé (24) après le déclenchement de l'actionneur (16), et
pour lequel en outre le moyen de retenue (30) est un câble d'allumage (32) de l'actionneur (16),
pour lequel une première extrémité du câble d'allumage (32) est reliée par un connecteur (36) à la partie séparable (26) de l'actionneur (16) et la deuxième extrémité du câble d'allumage (32) est relié à une unité d'alimentation électrique,
pour lequel est prévu un élément de sécurisation (38), qui sécurise le lien entre le câble d'allumage (32) et un connecteur (36) du câble d'allumage (32) et le cas échéant en complément sécurise le lien entre le connecteur (36) et la partie séparable (26) de l'actionneur (16) contre un détachement indésirable,
pour lequel l'élément de sécurisation (38) est réalisé sous la forme d'un manchon ou d'une gaine thermorétractable.

10. Module airbag selon la revendication 9, **caractérisé en ce que** l'actionneur pyrotechnique (16) comporte un inflammateur pyrotechnique (34) et un corps (20), dans lequel se trouve l'inflammateur (34), pour lequel le corps (20) se casse lors du déclenchement de l'inflammateur (34) dans la zone de fixation (22) en au moins un fragment séparé (24).

11. Module airbag selon les revendications 9 ou 10, **caractérisé en ce que** le moyen de retenue (30) est fixé dans un élément de module.
